# EUROPEAN PATENT SPECIFICATION

(11) **EP 2 091 172 B1**
(45) Date of publication and mention of the grant of the patent: **13.04.2016**
(21) Application number: 08002559.6
(22) Date of filing: 12.02.2008
(51) Int. Cl.: H04L 1/18

(54) **Method and device for data processing in a digital subscriber line environment and communication system comprising such device**
Verfahren und Vorrichtung zur Datenverarbeitung in einer digitalen Teilnehmerleitungsumgebung und Kommunikationssystem mit einer derartigen Vorrichtung
Procédé et dispositif de traitement de données dans un environnement de ligne de souscripteur numérique et système de communication comprenant un tel dispositif

(43) Date of publication of application: 19.08.2009
(73) Proprietor: Nokia Solutions and Networks Oy, 02610 Espoo (FI)
(72) Inventor: Ahrndt, Thomas, Dr., 85521 Ottobrunn (DE); Kuipers, Martin, 14624 Dallgow-Döberitz (DE); Schnitter, Matthias, 80689 München (DE)
(74) Representative: Borgström, Markus

(56) References cited:
- EP-A2- 1 821 446
- WO-A-03/056744
- US-A1- 2001 021 984
- US-A1- 2001 032 325
- US-A1- 2004 085 943

## Description

The invention relates to a method and to a device for data processing in a digital subscriber line environment and to a communication system comprising such a device.

DSL or xDSL, is a family of technologies that provide digital data transmission over the wires of a local telephone network.

Asymmetric Digital Subscriber Line (ADSL) is a form of DSL, a data communications technology that enables faster data transmission over copper telephone lines than a conventional voice band modem can provide. Such fast transmission is achieved by utilizing frequencies that are normally not used by a voice telephone call, in particular, frequencies higher than normal human hearing.

VDSL (Very High Speed DSL) is an xDSL technology providing faster data transmission over a single twisted pair of wires. High bit rates are achieved at a range of about 300 meters (1000 ft), which allows for 26 Mbit/s with symmetric access or up to 52 Mbit/s in downstream - 12 Mbit/s in upstream with asymmetric access.

Currently, standard VDSL uses up to 4 different frequency bands, two for upstream (from the client to the telecom provider) and two for downstream. Suitable modulation techniques are QAM (quadrature amplitude modulation) or DMT (discrete multitone modulation).

According to its high bandwidth, VDSL is capable of supporting applications like HDTV, as well as telephone services (e.g., Voice over IP) and general Internet access, over a single connection.

VDSL2 (Very High Speed Digital Subscriber Line 2) is an access technology that exploits the existing infrastructure of copper wires that were originally used for plain old telephone service (POTS). It can be deployed from central offices, from fiber-fed cabinets preferably located near the customer premises, or within buildings.

ITU-T G.993.2 (VDSL2) is an enhancement to G.993.1 (VDSL) that permits the transmission of asymmetric and symmetric (full duplex) aggregate data rates up to 200 Mbit/s on twisted pairs using a bandwidth up to 30 MHz.

Besides internet access, more and more applications require broadband transmission services. One example is a triple play offer, enabling a subscriber to uses one access service for internet, TV and voice data transmission. The TV application requires a big portion of the bandwidth available, e.g., one HDTV channel needs a data rate of about 12Mbit/s.

Multimedia services may in particular have different demands regarding a Quality-of-Service (QoS) of the underlying line. For example, voice data transmission is sensitive to delays introduced during transmission, whereas reception of TV data via DSL (IPTV) significantly suffers from lost or damaged IP packets as such errors have a direct impact (disturbed blocks) visible on the TV screen. In contrast, delays in the range of milliseconds and lost packets do not disturb ordinary internet browsing.

Electrical devices like machines, switches, power supplies, etc. generate impulse noise on electrical lines leading to an electro-magnetic field that may be coupled to DSL transmission lines thereby inducing impulse noise to the copper line. Impulse noise may be of high amplitude which results in reception errors or a total loss of DMT symbols in the DSL data stream.

Such impulse noise can be divided into two categories, Repetitive Electrical Impulse Noise (REIN) and Single High Impulse Noise (SHINE). While SHINE represents a one-time event, REIN refers to impulse noise with some periodicity and/or duration.

Usually forward error correction (FEC) and interleaving are utilized in DSL transmission systems. Said FEC adds redundant data to be transmitted in order to be able to correct a certain amount of transmission errors. FEC data can, e.g., be provided by a Reed-Solomon code. Further, a convolutional interleaver is used to disperse or spread burst errors over time thereby increasing a total correction capability.

An example for automatic retransmission requests (ARQ) used for error correction can be found in the US patent publication US20010032325A1. In this document enhancements to ARQ operations on a wireless air interface are disclosed.

However, the above concept of FEC and interleaving is rather ineffective against one-time event such as impulse noise. Providing a bigger interleaver would lead to additional delay and would require more memory space, while adding more redundancy bytes for FEC would increase the overhead data and hence decrease the overall data rate. On the other hand, providing extensive correction capability for a transmission scheme with rare severe disturbances like said impulse noise (SHINE) leads to a poor overall performance, because an extensive overhead is provided all the time for a comparatively rare disturbance. In addition, protecting the data stream against very long impulses is nearly impossible using FEC.

The problem to be solved is to overcome the disadvantages as stated above and in particular to provide an efficient approach to handle different kinds of errors that may occur over a communication line.

This problem is solved according to the features of the independent claims. Further embodiments result from the depending claims.

In order to overcome this problem, a method is suggested for data processing in a digital subscriber line environment according to claim 1.

This approach allows an efficient protection against various kinds of disturbances, e.g., correction of REIN, which is usually impossible for retransmission schemes on higher layers due to the high frequency of impulse noise and the long round trip delay introduced by higher layers.

It is to be noted that said digital subscriber line environment may in particular at least partially refer to any kind of DSL or similar technology (xDSL), e.g., ADSL, ADSL2, ADSL2+, HDSL, HDSL2, VDSL, VDSL2, etc.

In an embodiment, the first layer and/or the second layer provide forward error correction (FEC) capability.

It is also an embodiment that the first layer and/or the one second layer provide error detection capability.

Pursuant to another embodiment, the data processed on each layer is subdivided into packets and supplemented by FEC information and/or by redundancy information in order to detect an error of a data packet and/or in order to correct an error of a data packet.

According to an embodiment, the first layer indicates to a sender and/or to the second layer that retransmission is required.

Preferably, cross-layer communication can be utilized by conveying information from the first layer to the second layer, in particular, from layer 1 to layer 2.

According to the invention, traffic discrimination is provided by the second layer.

Advantageously, traffic types could be identified, in particular by the second layer, e.g. by layer 2. Upon the type of traffic, particular retransmission schemes or mechanisms may apply. For example, retransmission may be applicable for IPTV applications, whereas it may not apply in VoIP applications.

In yet another embodiment, retransmission of data is triggered or requested via an overhead channel and/or any other inband and/or outband signaling.

A retransmission request can be launched or initiated by either the first layer and/or by the second layer. Retransmission of data can be conducted via different channels, e.g., data and/or signaling channels. Inband and/or outband signaling can be utilized for retransmission purposes.

The problem stated above is also solved by a device for data processing comprising means (e.g., an ASIC or an FPGA) that is arranged such that the method as described herein is executed thereon.

According to an embodiment, said device is a communication device, in particular a device at a user premises or a device at a Central Office or a device at a remote Cabinet.

According to a next embodiment, said device is a Digital Subscriber Line Access Multiplexer (DSLAM), a Multi-Service Access Node (MSAN), an Optical Termination Unit (ONU) or a Multi-Dwelling Unit (MDU).

The problem stated supra is further solved by a communication system comprising the device as described herein.

Embodiments of the invention are shown and illustrated in the following figures:
- Fig.1: shows a VDSL2 functional model according to ITU G.993.2;
- Fig.2: shows an example of a data packet with an added on a layer 2 and a corresponding segmentation of said layer 2 information into layer 1 fragments, wherein each such fragment comprises a respective layer 1 CRC information;
- Fig.3: shows an example of the retransmission capability on layer 1;
- Fig.4: shows an example of a layer 2 retransmission that is based on the example of Fig.3.

The approach in particular provides a two-stage retransmission scheme, wherein a first retransmission capability is provided by a physical layer (layer 1) and a second retransmission capability is provided by an upper layer (e.g., layer 2).

The retransmission provided by the physical layer may preferably handle retransmission of data portions, packets or fragment of rather small size. Hence, transmission errors can be detected by the physical layer and received erroneous packets or erroneous fragments of packets are requested or triggered to be retransmitted by said physical layer. The erroneous packets or erroneous fragments are transmitted again and in case of error free reception such data is conveyed to an upper layer.

As stated above, a second retransmission capability is provided for erroneous data received by a higher layer. This bears several advantages: For the physical layer to detect all transmission errors, a rather large overhead in terms of CRC bytes would have to be inserted in the data stream. Furthermore, the memory required for the retransmission buffer of the physical layer is expensive as it is located inside a chipset.

Hence, advantageously, the memory required for retransmission buffering within the physical layer can be reduced and/or minimized by the approach provided herewith.

The second retransmission capability provided by at least one higher layer (e.g. layer 2) allows for retransmission of data packets that could not be detected or corrected by the physical layer.

As mentioned above, a reason could be either that the erroneous transmission is not detectable on the physical layer or the amount of memory provided at the physical layer is not sufficient to correct long bursts of errors.

On higher layers, a more powerful CRC could be provided for a complete data packet (or even more than one data packet). Hence, it gets quite unlikely that an error could not be detected by said higher layer.

Advantageously, traffic discrimination can be provided with this approach. As information relating to a type of content of at least one data packet may be available to said one higher layer, the type content may be associated with a decision as whether or not to apply retransmission with a longer round trip time. For example, traffic classes can be combined with particular types of services or data conveyed. An IPTV stream could be marked eligible for retransmission, whereas VoIP data could be marked not eligible for retransmission.

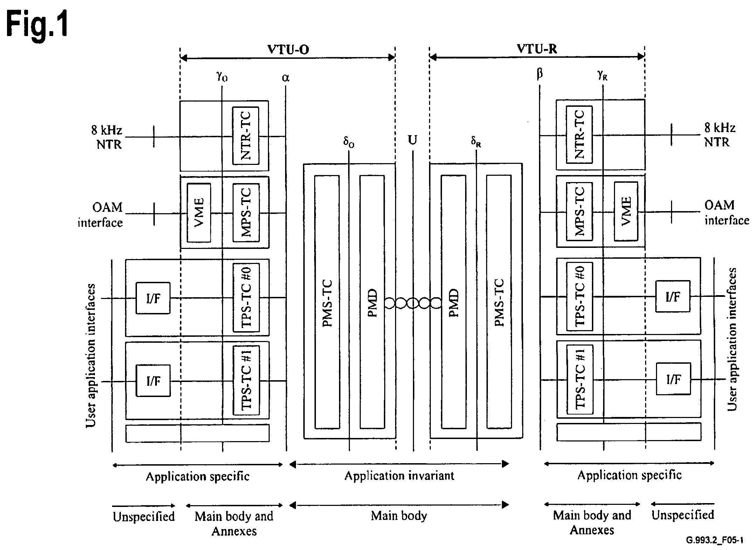

**Fig.1** shows a VDSL2 functional model according to ITU G.993.2.

According to the approach provided herein, a retransmission loop may be provided inside a physical media specific transmission convergence (PMS TC) sub-layer. An outer retransmission loop may be located on a layer 2 above a gamma γ-interface (γ_{O} and/or γ_{R}).

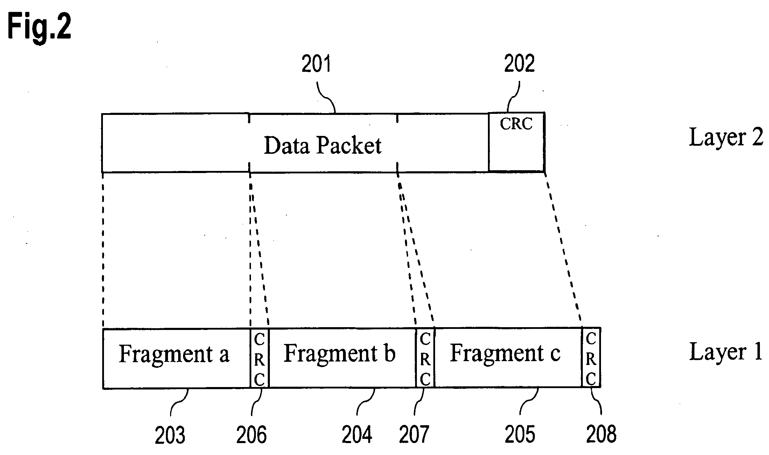

**Fig.2** shows an example of a data packet 201 with an added CRC 202 on a layer 2 and a corresponding segmentation of said layer 2 information into layer 1 fragments 203, 204, 205, wherein each such fragment 203, 204, 205 comprises a respective layer 1 CRC information 206, 207, 208.

The layer 2 CRC 202 is used to detect transmission errors anywhere in the data packet 201 and may have a length between 16 and 32 bits. The data packet 201 and the CRC 202 are forwarded to lower layers, where fragments 203, 204, 205 of the data packet 201 and the CRC 202 are used in layer 1 for the transmission via a physical media.

In order to limit an overhead, the smaller segments 203, 204 and 205 used on layer 1 preferably provide limited capability to detect transmission errors. Either a small CRC 206, 207, 208 (e.g., of 8bit length) as part of the FEC information, or information from the decoding process is used to detect non-correctable transmission errors.

Received erroneous fragments 203, 204, 205 are requested to be sent again from the corresponding side. Such request can be launched towards the sender via an overhead channel or via another inband and/or outband signaling.

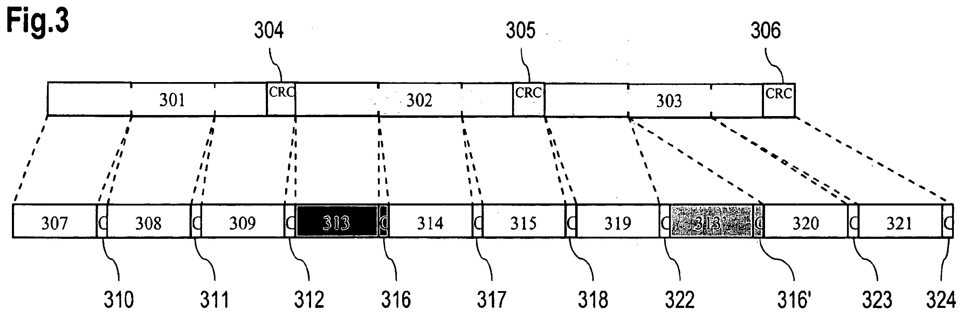

An example of the retransmission capability on layer 1 is shown in Fig.3. A layer 2 data packet 301 has a CRC 304 and both are subdivided into layer 1 fragments 307, 308, 309, wherein each layer 1 fragment is associated with a CRC 310, 311, 312. A subsequent layer 2 data packet 302 has a CRC 305 and both are subdivided into layer 1 fragments 313, 314, 315, wherein each layer 1 fragment is associated with a CRC 316, 317, 318. A subsequent layer 2 data packet 303 has a CRC 306 and both are subdivided into layer 1 fragments 319, 320, 321, wherein each layer 1 fragment is associated with a CRC 322, 323, 324.

In Fig.3, a layer 1 transmission error is detected (on layer 1) for fragment 313 and a request to re-send such fragment is issued to the sender. The sender provides this fragment 313' with CRC information 316' after fragment 319 and CRC 322.

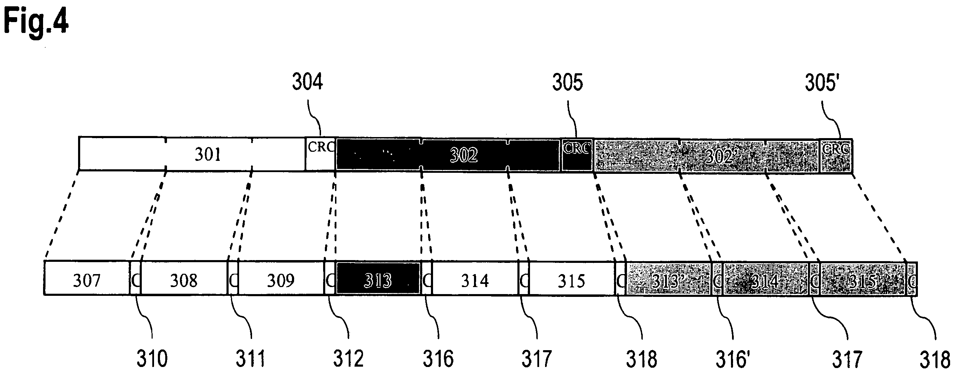

**Fig.4** shows an example of a layer 2 retransmission that is based on the example of Fig.3. Again, the layer 1 fragment 313 contains an error, which has not been detected by layer 1 detection capability. However, the more powerful CRC 305 on layer 2 is able to detect a transmission error of data packet 302. As a consequence, the whole data packet 302' has to be retransmitted.

### Further Advantages:

This approach allows correction of transmission errors that were due to its limited resources not detected on an underlying layer (physical layer).

Little overhead is spent for detecting transmission errors on layer 1 data fragments of minor size. Advantageously, this allows short round trip times for retransmission and it keeps the delay low.

Furthermore, this approach also allows correction of REIN, which is usually impossible for retransmission schemes on higher layers due to the high frequency of impulse noise and the long round trip delay introduced by higher layers.

Due to the additional correction capabilities on layer 2, a minor amount of memory may be utilized for layer 1 retransmission purposes. This is cost effective, because memory provided with the physical layer is much more expensive than memory provided on higher layers.

Moreover, this approach allows correction of very long sequences of impulse noise.

### Abbreviations

- CRC: Cyclic Redundancy Check
- DMT: Discrete Multitone
- DSL: Digital Subscriber Line
- FEC: Forward Error Correction
- HDTV: High Definition Television
- IP: Internet Protocol
- OSI: Open Systems Interconnection
- PMS TC: Physical Media Specific Transmission Convergence
- QoS: Quality-of-Service
- REIN: Repetitive Electrical Impulse Noise
- SHINE: Single High Impulse Noise

## Claims

1. A method for data processing in a digital subscriber line environment wherein a first retransmission capability is provided by the first layer based on the OSI model and a second retransmission capability is provided by the second layer based on the OSI model, the second layer being an upper layer relative to the first layer,
**characterized in that**
data traffic discrimination is provided by the second layer by identifying data traffic types and , depending on the data traffic type, deciding on whether or not to apply the second retransmission by the second layer.

2. The method according to any of the preceding claims,
wherein the first layer and/or the second layer provide forward error correction capability.

3. The method according to any of the preceding claims,
wherein the first layer and/or the second layer provide error detection capability.

4. The method according to any of the preceding claims,
wherein the data processed on each layer is subdivided into packets and supplemented by FEC information and/or by redundancy information in order to detect an error of a data packet and/or in order to correct an error of a data packet.

5. The method according to any of the preceding claims,
wherein the first layer indicates to a sender and/or to the second layer that retransmission is required.

6. The method according to any of the preceding claims,
wherein retransmission of data is triggered or requested via an overhead channel and/or any other inband and/or outband signaling.

7. A device for data processing in a digital subscriber line environment comprising means arranged such that the method according to any of the preceding claims is executed thereon.

8. The device according to claim 7, wherein said device is a communication device.

9. The device according to claim 7 or 8 designed as a device at a user premises or a device at a Central Office or a device at a remote Cabinet.

10. The device according to claim 7 or 8, wherein said device is a Digital Subscriber Line Access Multiplexer, a Multi-Service Access Node, an Optical Termination Unit or a Multi-Dwelling Unit.

11. A communication system comprising the device according to any of claims 7 to 10.

## Patentansprüche

1. Verfahren zur Datenverarbeitung in einer Anschlussleitungsumgebung, wobei eine erste Sendewiederholungsfähigkeit durch die erste Schicht gemäß des OSI-Modells geliefert wird und eine zweite Sendewiederholungsfähigkeit durch die zweite Schicht gemäß des OSI-Modells geleifert wird, wobei die zweite Schicht eine obere Schicht in Bezug auf die erste Schicht ist,
**dadurch gekennzeichnet, dass**
eine Datenverkehrsunterscheidung durch die zweite Schicht bereitgestellt wird, indem Datenverkehrstypen identifiziert werden und abhängig von dem Datenverkehrstyp entschieden wird, ob die zweite Sendewiederholung durch die zweite Schicht anzuwenden ist oder nicht.

2. Verfahren nach einem der vorhergehenden Ansprüche, wobei die erste Schicht und/oder die zweite Schicht eine Vorwärtsfehlerkorrekturfähigkeit bereitstellen.

3. Verfahren nach einem der vorhergehenden Ansprüche, wobei die erste Schicht und/oder die zweite Schicht eine Fehlerdetektionsfähigkeit bereitstellen.

4. Verfahren nach einem der vorhergehenden Ansprüche, wobei die auf jeder Schicht verarbeiteten Daten in Pakete unterteilt und durch FEC-Informationen und/oder durch Redundanzinformationen ergänzt werden, um einen Fehler eines Datenpakets zu detektieren und/oder einen Fehler eines Datenpakets zu korrigieren.

5. Verfahren nach einem der vorhergehenden Ansprüche, wobei die erste Schicht einem Sender und/oder der zweiten Schicht angibt, dass eine Sendewiederholung benötigt wird.

6. Verfahren nach einem der vorhergehenden Ansprüche, wobei die Sendewiederholung von Daten über einen Overhead-Kanal und/oder eine andere Inband- und/oder Außerbandsignalisierung ausgelöst oder angefordert wird.

7. Vorrichtung für eine Datenverarbeitung in einer Anschlussleitungsumgebung, die Mittel umfasst, die derart ausgelegt sind, dass das Verfahren nach einem der vorhergehenden Ansprüche darauf ausgeführt wird.

8. Vorrichtung nach Anspruch 7, wobei die Vorrichtung eine Kommunikationsvorrichtung ist.

9. Vorrichtung nach Anspruch 7 oder 8, die als eine Vorrichtung in einer Anwenderräumlichkeit oder eine Vorrichtung in einer Vermittlungsstelle oder eine Vorrichtung in einem entfernten Gehäuse gestaltet ist.

10. Vorrichtung nach Anspruch 7 oder 8, wobei die Vorrichtung ein digitaler Anschlussleitungszugriffsmultiplexer, ein Mehrfachdienstzugriffsknoten, eine optische Abschlusseinheit oder eine Einheit eines Mehrfamilienhauses ist.

11. Kommunikationssystem, das die Vorrichtung nach einem der Ansprüche 7 bis 10 umfasst.

## Revendications

1. Un procédé de traitement de données dans un environnement de ligne d'abonné numérique dans lequel une première capacité de retransmission est fournie par la première couche en fonction du modèle OSI et une deuxième capacité de retransmission est fournie par la deuxième couche en fonction du modèle OSI, la deuxième couche étant une couche supérieure par rapport à la première couche,
**caractérisé en ce que**
une discrimination de trafic de données est fournie par la deuxième couche par l'identification de types de trafic de données et, en fonction du type de trafic de données, par la décision s'il convient ou non d'appliquer la deuxième retransmission par la deuxième couche.

2. Le procédé selon l'une quelconque des revendications précédentes, dans lequel la première couche et/ou la deuxième couche fournissent une capacité de correction d'erreurs sans voie de retour.

3. Le procédé selon l'une quelconque des revendications précédentes, dans lequel la première couche et/ou la deuxième couche fournissent une capacité de détection d'erreurs.

4. Le procédé selon l'une quelconque des revendications précédentes, dans lequel les données traitées sur chaque couche sont subdivisées en paquets et complétées par des informations FEC et/ou par des informations de redondance afin de détecter une erreur d'un paquet de données et/ou afin de corriger une erreur d'un paquet de données.

5. Le procédé selon l'une quelconque des revendications précédentes, dans lequel la première couche indique à un expéditeur et/ou à la deuxième couche qu'une retransmission est requise.

6. Le procédé selon l'une quelconque des revendications précédentes, dans lequel la retransmission de données est déclenchée ou demandée par l'intermédiaire d'un canal de surdébit et/ou de toute autre signalisation intrabande et/ou hors bande.

7. Un dispositif de traitement de données dans un environnement de ligne d'abonné numérique comprenant un moyen agencé de sorte que le procédé selon l'une quelconque des revendications précédentes soit exécuté sur celui-ci.

8. Le dispositif selon la revendication 7, dans lequel ledit dispositif est un dispositif de communication.

9. Le dispositif selon la revendication 7 ou 8 conçu sous la forme d'un dispositif installé dans des locaux d'utilisateur ou d'un dispositif installé dans un central téléphonique ou d'un dispositif installé dans une armoire distante.

10. Le dispositif selon la revendication 7 ou 8, dans lequel ledit dispositif est un multiplexeur d'accès de ligne d'abonné numérique, un noeud d'accès multi-service, une unité de terminaison optique ou une unité multi-logement.

11. Un système de communication comprenant le dispositif selon l'une quelconque des revendications 7 à 10.
